# EUROPEAN PATENT SPECIFICATION

(11) **EP 3 471 582 B1**
(45) Date of publication and mention of the grant of the patent: **13.05.2020**
(21) Application number: 17730166.0
(22) Date of filing: 14.06.2017
(51) Int. Cl.: A47J 27/04

(54) **METHOD FOR CONTROLLING ELECTRIC COOKERS**
VERFAHREN ZUR STEUERUNG EINES ELEKTRISCHEN KOCHERS
PROCÉDÉ DE COMMANDE DE CUISEURS ÉLECTRIQUES

(30) Priority: 15.06.2016 CN 201610428466
(43) Date of publication of application: 24.04.2019
(73) Proprietor: SEB S.A., 69130 Ecully (FR)
(72) Inventor: MA, Chao, Hangzhou Zhejiang 310051 (CN); LU, Hua, Hangzhou Zhejiang 310051 (CN)
(74) Representative: Bourrières, Patrice
(86) International application number: PCT/EP2017/064646
(87) International publication number: WO 2017/216275

(56) References cited:
- CN-A- 1 157 708
- CN-A- 104 510 325
- CN-A- 105 212 679
- CN-U- 202 960 083
- CN-U- 204 245 902
- JP-A- 2006 158 802
- JP-A- 2016 087 123

## Description

### Technical Field

The present invention relates to the field of cooking equipment and in particular to a method for controlling electric cookers.

### Background Art

Electric cookers of the prior art are inbuilt with an internal pot, which is in turn equipped with a steamer. The rice is placed within the steamer, and water is contained within the internal pot. Electric cookers of the prior art are controlled by heating the water inside the internal pot until it boils, which causes the rice inside the steamer to come into contact with and absorb the water. The rice is then steamed until it is cooked to produce cooked rice with low GI (Glycemic Index).

However, the electric cooker control method of the prior art cannot ensure that the amount of water that enters the steamer is adequate. This means part of the rice inside the steamer may not come into contact with the water, and hence cannot be effectively washed or cannot absorb an adequate amount of water. This in turn compromises the taste of the cooked rice. Furthermore, the control method of the prior art is also unable to ensure the effective separation of the rice and water, and hence only a small amount of sugar is washed away by the water. It is therefore difficult to produce cooked rice with low GI (Glycemic Index).

Electric cookers of the prior art present some operational inadequacies. Since water is boiled within the internal pot, if the operational duration of and control over the heating element are not properly managed, it can lead to over-spilling of the water from the internal pot due to vigorous boiling, which in turn presents a safety hazard. At the same time, due to vigorous boiling, the water is unable to come into stable contact with the rice, and this affects absorption of water by the rice. The taste of the cooked rice will consequently be compromised. The document CN 204 245 902 U discloses an electric cooker and a method for controlling it.

### Summary

The main object of the present invention is to provide an effective method for controlling electric cookers, which can lower the GI value and improve the taste of cooked rice.

To achieve the above object, the present invention provides a method for controlling electric cookers. The cooker comprises an internal pot, a heating element, a spill detection unit and a steamer positioned within the internal pot. In this method, the heating element heats up the internal pot, and the bottom of the steamer has an open structure that extends towards the bottom wall and/or side wall of the internal pot. The steamer comprises a water permeable area and a bearing cavity positioned above the water permeable area. The open top space formed by the open structure is interconnected with the bearing cavity through the water permeable area, the detection end of the spill detection unit is interconnected with the bearing cavity, and the top of the steamer is interconnected with the mouth of the internal pot. The method of controlling the electric cooker comprises the following steps: the heating element in the electric cooker heats up the internal pot, and the electric cooker enters the rice washing and cooking step; in a single rice wash-and-cook cycle, the heating element heats up the internal pot of the electric cooker until the spill detection unit comes into contact with water, at this point, the heating element stops operating and the cooker continues with the rice wash-and-cook cycle until the first preset time t1, and this cycle is repeated N1 times; the cooker then enters the rice-steaming step, in which the heating element heats up the internal pot again. Further, during a single rice wash-and-cook cycle, the first preset time t1 is at least 3 seconds but at most 150 seconds, and N1 is at least 2 but at most 100.

Further, during a single rice wash-and-cook cycle, the first preset time t1 is at least 5 seconds but at most 100 seconds, and N1 is at least 4 but at most 80.

Further, during the entire rice-steaming step, the heating element heats up the internal pot continuously until the rice is cooked through steaming.

Further, during a single rice steaming cycle, after the heating element heats up the internal pot up to a second preset time t2. The heating element then stops operating and the cooker continues with rice steaming until the third preset time t3. This rice steaming cycle is repeated N2 times.

Further, during a single rice steaming cycle, the second preset time t2 is at least 3 seconds but at most 150 seconds, the third present time t3 is at least 3 seconds but at most 150 seconds, and N2 is at least 2 and at most 100.

Further, N2 is at least 4 and at most 80.

Further, the entire rice steaming step is divided into the preliminary rice stage and the final rice steaming stage according to sequence in time, wherein in the preliminary rice steaming stage, the heating element heats up the internal pot for up to a second preset time t2 known as t21, while in the final rice steaming stage, the heating element heats up the internal pot up to a second preset time t2 known as t22, and t21 is longer than t22.

Further, t21 is at least 3 seconds but at most 150 seconds; t22 is at least 3 seconds but at most 150 seconds,
Further, the entire rice steaming step is divided into the preliminary rice stage and the final rice steaming stage according to sequence in time, wherein in the preliminary rice steaming stage, after the heating element stops operating, rice steaming is allowed to continue up to a third preset time t3 known as t31, while in the final rice steaming stage, after the heating element stops operating, rice steaming is allowed to continue up to a third preset time t3 known as t32; t31 is at least 3 seconds but at most 150 seconds, while t32 is at least 3 seconds but at most 150 seconds.

The electric cooker further comprises a pressure control switch for releasing the pressure built up within the separating cavity between the external surface of the steamer and the interior wall of the internal pot. When this pressure control switch is opened, the separating cavity is connected to the exterior of the electric cooker to speed up the release of water from the bearing cavity.

Applying the technical solution of the present invention, the heating element within the electric cooker heats up the internal pot within the cooker, and the cooker enters the rice washing and cooking step; during a single rice wash-and-cook cycle, the heating element heats up the internal pot until the spill detection unit comes into contact with water, at this point, the heating element stops operating and the cooker continues with the rice wash-and-cook cycle until the preset time t1, and this cycle is repeated N1 times; the cooker then enters the rice-steaming step, in which the heating element heats up the internal pot again.

By controlling when the heating element is turned on and off, factors such as water temperature, the number of times the rice comes into contact with water, and the duration for which the water is retained within the bearing cavity can be effectively controlled, and the electric cooker can automatically subject the rice to washing and water absorption, as well as complete the cooking of the rice through boiling followed by steaming. The cooker is hence able to produce cooked rice with low GI and improved taste and nutritional value, which generates a higher level of satisfaction among its users.

Hence, through the control method described above, the operation of the electric cooker can be effectively controlled to offer advantages such as providing multiple functions, and high levels of automation and usability.

### Description of the Drawings

The drawings constitute a portion of the Description for further understanding of the present invention. These drawings illustrate the embodiments of the present invention and explain the principle of the present invention together with the Description. They are not intended to limit the scope of the invention. In the drawings:
FIG. 1 is a schematic view of an optional embodiment of the electric cooker of the present invention;
FIG. 2 depicts the relative positions of the internal pot, steamer and spill detection unit in FIG. 1 before the rice comes into contact with water;
FIG. 3 depicts the relative positions of the internal pot, steamer and spill detection unit in FIG. 1 when water comes into contact with the rice and spill detection unit;
FIG. 4 is a flowchart depicting the method of controlling the electric cooker shown in FIG. 1.

With reference to the above figures, wherein like parts are indicated by like reference numbers:
10. Internal pot; 20. Steamer; 21 Open structure; 211. Open top space; 22. Water permeable area; 23. Bearing cavity; 30. Separating cavity; 40. Spill detection unit; 50. External housing; 60. Top cover; 70. First sealing ring; 80. Heating element.

### Detailed Description

It should be noted that the particular features of any specific embodiment may be combined in any suitable manner with one or more other specific embodiments. Representative embodiments of the present invention are explained hereinafter with reference to the accompanying drawings.

It is to be understood that the following detailed description are exemplary and explanatory, and are intended to provide further explanation of the invention. Unless otherwise defined, all terms (including technical and scientific terms) used herein have the same meaning as commonly understood by one of ordinary skill in the art to which this invention belongs.

In the present invention, terms indicating orientation or direction, such as "up, down, top or bottom" are not intended to be absolute terms unless the context requires or indicates otherwise. These terms will normally refer to orientations shown in the drawings. Similarly, to facilitate understanding and description, "internal" and "external" refer to a positioning with respect to the boundary of the part itself. The above terms are not intended to restrict the scope of this invention.

The present invention provides an effective method for controlling electric cookers, which can lower the GI value and improve the taste of cooked rice.

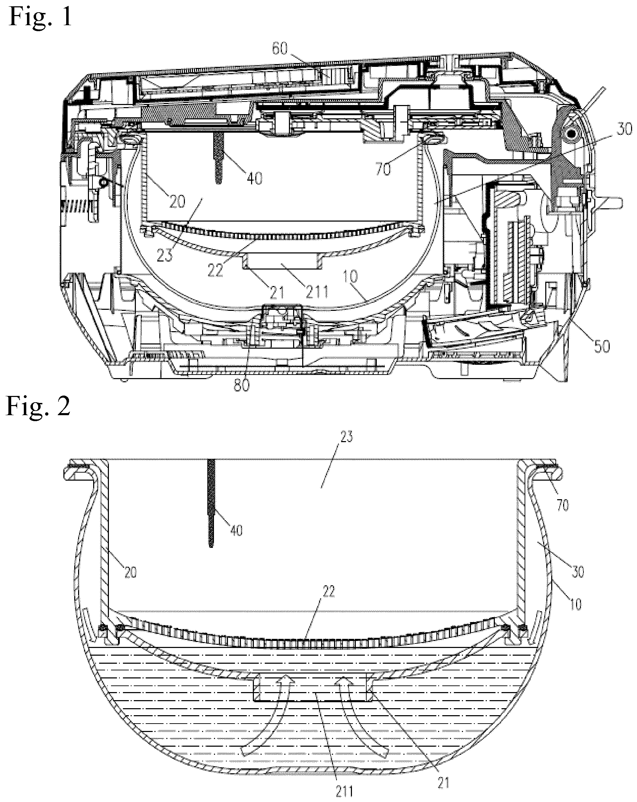

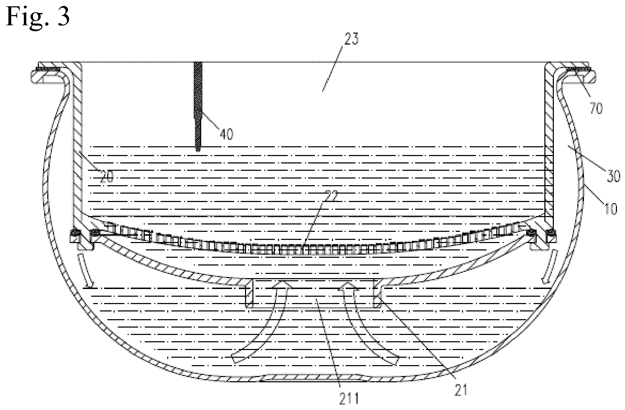

As shown in FIG. 1 to 3, the electric cooker comprises internal pot 10, heating element 80, spill detection unit 40, steamer 20 housed within internal pot 10, and heating element 80 heats up the internal pot 10, the bottom of steamer 20 has an open structure 21 that extends towards the bottom wall and/or side wall of internal pot 10, steamer 20 comprises water permeable area 22 and a bearing cavity 23 positioned above water permeable area 22, open top space 211 formed by open structure 21 is interconnected with the bearing cavity 23 through the water permeable area 22, the detection end of spill detection unit 40 is interconnected with bearing cavity 23, and the top of steamer 20 is interconnected with the mouth of internal pot 10.

Optionally, the top of steamer 20 can be connected to the mouth of internal pot 10 through a sealed connection. This effectively ensures that when pressure within separating cavity 30 rises, the water is pushed smoothly through open structure 21 into bearing cavity 23 by the steam, and steam is prevented from escaping through the top of steamer 20 and the mouth of internal pot 10.

As shown in FIG. 1, the top of steamer 20 and the mouth of internal pot 10 are sealed using first sealing ring 70.

As shown in FIG. 1, the electric cooker further comprises external housing 50 and top cover 60, and internal pot 10 is housed within external housing 50; top cover 60 is positioned on external housing 50, and the first end of spill detection unit 40 is connected with top cover 60, while the second end of spill detection unit 40 extends towards the bottom wall of internal pot 10. Optionally, the second end of spill detection unit 40 is the detection end. In this way, when the water level within bearing cavity 23 gradually rises, it will come into contact with the detection end of spill detection unit 40, and a spill-prevention signal will be sent by the unit to stop the heating of the heating element.

The electric cooker described above is an electric rice cooker, but it can also be a microwave, electric slow cooker or electric pressure cooker.

Optionally, heating element 80 is a heating device selected from the group comprising a heating plate, heating tube, IH electromagnetic heating device and heating film.

Optionally, spill detection unit 40 is a probe selected from the group comprising a spill detection probe, temperature probe, water level detector, infrared probe and ultrasound probe. This means that in addition to the probes and detectors listed above, any sensor that can detect water level or the rise in water level may also be used as spill detection unit 40.

It should be noted that before using the electric cooker of the present invention, rice must be added to bearing cavity 23 of steamer 20, and water must be added to internal pot 10.

The method for controlling the electric cooker of the structure described above comprises the following steps: heating element 80 within the electric cooker heats up internal pot 10 within the electric cooker, and the cooker enters the rice washing and cooking step; in a single rice wash-and-cook cycle, heating element 80 heats up internal pot 10 until spill detection unit 40 comes into contact with water, at this point, heating element 80 stops operating and the cooker continues with the rice wash-and-cook cycle until the first preset time t1, and this cycle is repeated N1 times; the cooker then enters the rice-steaming step, in which heating element 80 heats up internal pot 10 again.

When cooking using the electric cooker of the structure described above, as heating element 80 starts to heat up internal pot 10, the pressure within internal pot 10 will rise, and steam rapidly fills up separating cavity 30. Pressure within separating cavity 30 rises, and a pressure difference is created between separating cavity 30 and bearing cavity 23. At this time, water is pushed into bearing cavity 23 by the pressure and comes into contact with the rice within it, and this causes the rice to be soaked and cooked. As the heating continues, pressure within separating cavity 30 continues to rise, and this causes more water to be pushed from internal pot 10 into bearing cavity 23. During this time, rice comes into adequate contact with water and absorbs a sufficient amount of water, and hence enters the cooking and washing step.

It should be noted that, as the heating continues, there is a risk of water spillage, which poses a potential safety hazard. For more effective cooking of the rice and to prevent spillage, water level in bearing cavity 23 is detected using spill detection unit 40. When water level rises and water comes into contact with spill detection unit 40, the operation of heating element 80 is stopped or the power of heating element 80 is reduced, and this lowers the water level and prevents spillage. When the water level falls below the detection range of spill detection unit 40, heating of heating element 80 is started again to ensure that the rice in bearing cavity 23 comes into adequate contact with water and absorbs a sufficient amount of water. The rice washing and cooking step is completed in cycles.

Further, with the completion of the rice washing and cooking step, water is absorbed by the rice, and water level falls to a point where it is no longer possible to cover open top space 211. At this time, separating cavity 30 is still interconnected with bearing cavity 23. As internal pot 10 continues to be heated, water will no longer be pushed into bearing cavity 23. At this time, only the rising steam will enter bearing cavity 23 from open structure 21 to steam the rice.

This means that by controlling when heating element 80 is turned on and off, factors such as water temperature, the number of times the rice comes into contact with water, and the duration for which the water is retained within bearing cavity 23 can be effectively controlled, and the electric cooker can automatically subject the rice to washing and water absorption, as well as complete the cooking of the rice through boiling followed by steaming. The cooker is hence able to produce cooked rice with low GI and improved taste and nutritional value, which generates a higher level of satisfaction among the users.

Hence, through the control method described above, the operation of electric cooker can be effectively controlled to offer advantages such as providing multiple functions, and high levels of automation and usability.

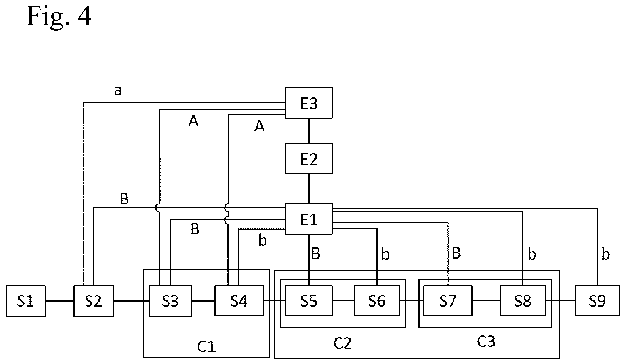

Hereinafter the control method depicted in the flowchart in FIG. 4 will be explained in detail, wherein different steps and elements of the flowchart are represented by following references:

| | |
|---|---|
| S1: Place a certain amount of water into the internal pot | |
| S2: Put in the steamer, and put rice into steamer, the heating element begins to get heated | |
| S3: Water in the internal pot is heated | |
| S4: Water in the internal pot stops getting heated, and the contents of the pot is held up to the first preset time t1 | |
| S5: Water in the internal pot is heated and boiled, and this status is maintained up to the first preset time t21 | |
| S6: Water in the internal pot stops getting heated, and this status is maintained up to the first preset time t31 | |
| S7: Water in the internal pot is heated and boiled, and this status is maintained up to the first preset time t22 | |
| S8: Water in the internal pot stops getting heated, and this status is maintained up to the first preset time t32 | |
| S9: Electric cooker stops operating | |
| E1: Heating element | a: Not detected |
| E2: Controller | A: detected |
| E3: Spill detection unit | b: Not powered |
| C1: Cycle repeated N1 times | B: powered |
| C2: Cycle repeated N21 times | C3: Cycle repeated N22 times |

The electric cooker illustrated in FIG. 1 to 3 is equipped with spill detection unit 40. In the electric cookers of this structure, the rice in the electric cooker is washed, cooked and steamed by controlling when heating element 80 is turned on and off. This is achieved by detecting changes in water level within bearing cavity 23 using spill detection unit 40.

To use an electric cooker of this structure, rice must be first placed within steamer 20, and water must be added into internal pot 10. Under the action of the pressure of the steam, water is gradually pushed into bearing cavity 23. When the water level in bearing cavity 23 rises to a point where water comes into contact with spill detection unit 40, heating of heating element 80 will be stopped, and water that was pushed into bearing cavity 23 will fall back into internal pot 10.

In the above process, optionally, the first preset time t1 is at least 3 seconds but at most 150 seconds, and N1 is at least 2 but at most 100.

Further optionally, in a single rice wash-and-cook cycle, the preset time t1 is at least 5 seconds but at most 100 seconds, and N1 is at least 4 but at most 80.

Thereafter, the cooker enters the rice steaming step. Two different control methods are described below.

In the first method, heating element 80 heats up internal pot 10 continuously throughout the entire rice-steaming step until the rice is cooked through steaming. This method of control is relatively simple, and is especially suitable for cases in which the rice has absorbed a sufficient amount of water during the washing and cooking step, and water level within internal pot 10 is low.

In the second method, during a single rice steaming cycle, after heating element 80 heats up internal pot 10 for a preset time t2, heating element 80 stops operating and the cooker continues with rice steaming until the preset time t3, and the rice steaming cycle is repeated N2 times. It should be noted that after the washing and cooking step, there may be still substantial amount of water remaining in internal pot 10. At this point, to ensure that the water in internal pot 10 will not enter open structure 21 and cause an imbalance of pressure between separating cavity 30 and bearing cavity 23, the turning on and off of heating element 80 must be controlled. This will ensure that water will not enter open structure 21, and bearing cavity 23 and separating cavity 30 remain connected. In this manner, not only is heating efficiency ensured during the rice steaming process, the rice is also prevented from coming into contact with water, hence increasing the reliability of the rice steaming operation.

Optionally, during a single rice steaming cycle, the second preset time t2 is at least 3 seconds but at most 150 seconds, the third present time t3 is at least 3 seconds but at most 150 seconds, and N2 is at least 2 and at most 100.

Further optionally, N2 is at least 4 and at most 80.

To improve the taste of the cooked rice and to enhance the performance of the electric cooker, the entire rice steaming step is divided into the preliminary rice steaming stage and the final rice steaming stage according to sequence in time. In the preliminary rice steaming stage, rice steaming is repeated for N21 times; in the final rice steaming stage, rice steaming is repeated N22 times; N2 is the sum of N21 and N22, with N21 being at least 2 and at most 100, and N22 being at least 2 and at most 100. The entire rice steaming step is divided into two stages, which are independently operated and controlled to improve the operational reliability of the electric cooker and the taste of the cooked food.

Optionally, N21 is at least 4 and at most 80; N22 is at least 4 and at most 80.

It should be noted that, in the preliminary rice steaming stage, heating element 80 heats up internal pot 10 up to a second present time t2 known as t21. During this stage, controlling the duration of water boiling can ensure that sufficient steam is produced within internal pot 10, which can keep the rice in the electric cooker under high-temperature steaming conditions, and at the same time, prevent the boiling water from rising and coming into contact with the rice. Hence, t21 must be longer.

Optionally, t21 is at least 3 seconds but at most 150 seconds.

In the same preliminary rice steaming stage, heating element 80 stops operating and rice steaming is continued up to a third preset time t3 known as t31. During this stage, heating element 80 stops heating up for a period of time to prevent the boiling water from generating excessive amounts of steam. Excessive steam can cause the pressure within separating cavity 30 to become too large, and in turn lead to spilling of water. Hence, this is an effective means of preventing spillage and conserving energy.

Optionally, t31 is at least 3 seconds but at most 150 seconds.

It should be noted that in the final rice steaming stage, heating element 80 heats up internal pot 10 for a second present time t2, which is known as t22, and t21 is longer than t22. This is because as rice steaming progresses, water is continuously evaporated into steam, and the concentration of the rice milk in internal pot 10 increases continuously. Under heating, it is more prone to escaping into bearing cavity 23 and coming into contact with the rice, which will compromise the moisture content and GI value of the cooked rice. Hence, t21 must be longer than t22.

Optionally, t22 is at least 3 seconds but at most 150 seconds.

Additionally, in the final rice steaming stage, as water evaporates into steam, the concentration of the liquid in internal pot 10 increases. When highly concentrated water is heated, it is prone to bubbling and spilling. Hence, the heating of heating element 80 must be stopped while rice steaming continues up to a preset time t3 known as t32. This means that after heating element 80 is continuously heated up to t22, the heating of heating element 80 should be stopped and rice steaming allowed to continue up to t32, so as to reduce the pressure within separating cavity 30 and prevent water from being pushed towards the rice.

Optionally, t32 is at least 3 seconds but at most 150 seconds.

Of course, during rice steaming, the on and off times of heating element 80 need not be entirely regular. This means that the heating duration and stopping duration of heating element 80 can be optimized based on the progress of cooking, such that the on and off times of heating element 80 vary between cycles.

Table 1 below shows the method of controlling the electric cooker during the rice steaming step.

**Table 1. Method of controlling the electric cooker during the rice steaming step**

| | Rice steaming step | | | |
|---|---|---|---|---|
| No. of times | Preliminary rice steaming stage | | Final rice steaming stage | |
| | t21 (seconds) | t31 (seconds) | t22 (seconds) | t32 (seconds) |
| 1 | 3 | 12 | 3 | 16 |
| 2 | 68 | 3 | 65 | 3 |
| 3 | 88 | 25 | 81 | 25 |
| 4 | 90 | 40 | 87 | 35 |
| 5 | 98 | 45 | 92 | 50 |
| 6 | 105 | 60 | 102 | 63 |
| 7 | 110 | 60 | 120 | 65 |
| 8 | 125 | 88 | 150 | 80 |
| 9 | 150 | 80 | | |
| 10 | 130 | 90 | | |

Using an electric cooker of the structure described above and controlling the operation of the electric cooker through the control method described above allow the electric cooker to be equipped with multiple functions such as rice washing, cooking and steaming, etc. At the same, the cooked rice has low GI, which increases the level of user satisfaction.

It should be noted that to increase the speed at which water returns to internal pot 10, the electric cooker also comprises a pressure control switch for releasing the pressure within separating cavity 30. When the pressure control switch is opened, separating cavity 30 is connected with the exterior of the electric cooker, and this increases the speed at which water leaves bearing cavity 23.

In an alternative embodiment that is not shown, when top cover 60 is closed, a pressure relief channel located on top of top cover 60 can be connected with separating cavity 30, and the pressure control switch can be used to control the opening of this pressure relief channel. When it is necessary to increase the pressure within separating cavity 30, the pressure control switch will close the pressure relief channel to ensure stable increase in pressure within separating cavity 30. When water must be released from bearing cavity 23, the pressure control switch must be opened to connect the separating cavity 30 to the exterior of the electric cooker through the pressure relief channel to release pressure.

Optionally, the pressure control switch can be a one-way valve or solenoid valve.

It should be noted that technological terms used herein are merely used to describe a specific embodiment, but not to limit the present invention. In this application, the terms "comprising" and "including" should not be construed to necessarily include all of the elements or steps disclosed herein, and should be construed not to include some of the elements or steps thereof, or should be construed to further include additional elements or steps and/or combinations thereof.

Terms including an ordinal number such as first or second may be used to describe various components, but the terms need not necessarily indicate a specific sequence or order. It should be understood that the above terms are interchangeable, where appropriate, such that the specific embodiments described herein can be implemented in orders or sequences other than those indicated in the figures and descriptions contained herein.

## Claims

1. Method for controlling electric cookers, wherein said electric cookers comprise internal pot (10), heating element (80), spill detection unit (40), steamer (20) housed within said internal pot (10), and said heating element (80) heats up said internal pot (10), the bottom of said steamer (20) having an open structure (21) that extends towards the bottom wall and/or side wall of said internal pot (10), said steamer (20) comprising water permeable area (22) and bearing cavity (23) positioned above said water permeable area (22), open top space (211) formed by said open structure (21) being interconnected with said bearing cavity (23) through said water permeable area (22), the detection end of spill detection unit (40) being interconnected with said bearing cavity (23), and the top of said steamer (20) being interconnected with the mouth of said internal pot (10); said method of controlling electric cookers comprising the following steps:
Said heating element (80) of the electric cooker heats up the internal pot (10) in said electric cooker, and said electric cooker enters the rice wash-and-cook step;
During a single rice wash-and-cook cycle, said heating element (80) heats up the internal pot (10) within said electric cooker until said spill detection unit (40) comes into contact with water, and at this point, said heating element (80) will stop operating and the cooker continues with the single rice wash-and-cook cycle until the first preset time t1, and this cycle is repeated N1 times;
Said electric cooker enters the rice steaming step, and said heating element (80) heats up the internal pot (10) in said electric cooker.

2. Method according to Claim 1, **characterized in that** in a single rice wash-and-cook cycle, said first preset time t1 is at least 3 seconds and at most 150 seconds, and said N1 is at least 2 and at most 100.

3. Method according to Claim 2 **characterized in that** in a single rice wash-and-cook cycle, said first preset time t1 is at least 5 seconds and at most 100 seconds, and said N1 is at least 4 and at most 80.

4. Method according to Claim 1, **characterized in that** during the entire period of said rice steaming step, said heating element (80) heats up said internal pot (10) continuously until the rice is cooked by steaming.

5. Method according to Claim 1, **characterized in that** during a single rice steaming cycle, after said heating element (80) heats up said internal pot (10) for a second preset time t2, said heating element (80) stops operating and the cooker continues with rice steaming until the third preset time t3, and this rice steaming cycle is repeated N2 times.

6. Method according to Claim 5, **characterized in that** in a single rice steaming cycle, said second preset time t2 is at least 3 seconds and at most 150 seconds, said third preset time t3 is at least 3 seconds and at most 150 seconds, and said N2 is at least 2 and at most 100.

7. Method according to Claim 6, **characterized in that** said N2 is at least 4 and at most 80.

8. Method according to Claim 5, **characterized in that** the entire rice steaming step is divided into the preliminary rice steaming stage and the final rice steaming stage according to sequence in time, whereby
during said preliminary rice steaming stage, said heating element (80) heats up the internal pot (10) in said electric cooker for a second present time t2 known as t21;
during said final rice steaming stage, said heating element (80) heats up the internal pot (10) in said electric cooker for a second present time t2 known as t22, wherein said t21 is longer than said t22.

9. Method according to Claim 8, **characterized in that** said t21 is at least 3 seconds and at most 150 seconds, and said t22 is at least 3 seconds and at most 150 seconds.

10. Method according to Claim 5, **characterized in that** the entire rice steaming step is divided into the preliminary rice steaming stage and the final rice steaming stage according to sequence in time, whereby
in said preliminary rice steaming stage, said heating element (80) stops operating and rice steaming is continued up to a third preset time t3 known as t31;
in said final rice steaming stage, said heating element (80) stops operating and rice steaming is continued up to a third preset time t3 known as t32, wherein said t31 is at least 3 seconds and at most 150 seconds, and said t32 is as least 3 seconds and at most 150 seconds.

11. Method according to Claim 1, **characterized in that** said electric cooker further comprises a pressure control switch for releasing the pressure built up within the separating cavity (30) between the external surface of said steamer (20) and the interior wall of said internal pot (10); when said pressure control switch is opened, said separating cavity (30) will be connected to the exterior of said electric cooker to speed up the release of water from said bearing cavity (23).

## Patentansprüche

1. Verfahren zum Steuern von Elektrokochern, wobei die Elektrokocher einen Innentopf (10), ein Heizelement (80), eine Überlauferfassungseinheit (40) und einen im Innentopf (10) untergebrachten Dampferzeuger (20) umfassen und das Heizelement (80) den Innentopf (10) aufheizt, wobei der Boden des Dampferzeugers (20) eine offene Struktur (21) aufweist, die sich zur Bodenwand und/oder Seitenwand des Innentopfes (10) hin erstreckt, wobei der Dampferzeuger (20) einen wasserdurchlässigen Bereich (22) und einen über dem wasserdurchlässigen Bereich (22) angeordneten Lagerhohlraum (23) aufweist, wobei ein offener oberer Raum (211), der durch die offene Struktur (21) gebildet wird, mit dem Lagerhohlraum (23) durch den wasserdurchlässigen Bereich (22) verbunden ist, wobei das Detektionsende einer Überlauferfassungseinheit (40) mit dem Lagerhohlraum (23) verbunden ist, und wobei die Oberseite des Dampferzeugers (20) mit der Öffnung des Innentopfes (10) verbunden ist; wobei das Verfahren zur Steuerung von Elektrokochern die folgenden Schritte umfasst:
Das Heizelement (80) des Elektrokochers heizt den Innentopf (10) im Elektrokocher auf und der Elektrokocher tritt in den Reiswasch- und Kochschritt ein;
Während eines einzigen Reiswasch- und Kochzyklus heizt das Heizelement (80) den Innentopf (10) innerhalb des Elektrokochers auf, bis die Überlauferfassungseinheit (40) mit Wasser in Kontakt kommt, und an diesem Punkt hört das Heizelement (80) auf zu arbeiten und der Kocher fährt mit dem einzigen Reiswasch- und Kochzyklus bis zur ersten voreingestellten Zeit t1 fort, und dieser Zyklus wird N1 Mal wiederholt;
Der Elektrokocher tritt in den Reisdämpfschritt ein und das Heizelement (80) heizt den Innentopf (10) in dem Elektrokocher auf.

2. Verfahren nach Anspruch 1, **dadurch gekennzeichnet, dass** in einem einzigen Reiswasch- und Kochzyklus die erste voreingestellte Zeit t1 mindestens 3 Sekunden und höchstens 150 Sekunden beträgt und N1 mindestens 2 und höchstens 100 beträgt.

3. Verfahren nach Anspruch 2, **dadurch gekennzeichnet, dass** in einem einzigen Reiswasch- und Kochzyklus die erste voreingestellte Zeit t1 mindestens 5 Sekunden und höchstens 100 Sekunden beträgt und N1 mindestens 4 und höchstens 80 beträgt.

4. Verfahren nach Anspruch 1, **dadurch gekennzeichnet, dass** das Heizelement (80) während der gesamten Dauer des Reisdämpfschrittes den Innentopf (10) kontinuierlich aufheizt, bis der Reis durch Dämpfen gekocht wird.

5. Verfahren nach Anspruch 1, **dadurch gekennzeichnet, dass** während eines einzigen Reisdämpfzyklus, nachdem das Heizelement (80) den Innentopf (10) für eine zweite voreingestellte Zeit t2 erwärmt hat, das Heizelement (80) den Betrieb stoppt und der Kocher mit dem Reisdämpfen bis zur dritten voreingestellten Zeit t3 fortfährt, und dieser Reisdämpfzyklus N2-mal wiederholt wird.

6. Verfahren nach Anspruch 5, **dadurch gekennzeichnet, dass** in einem einzigen Reisdämpfzyklus die zweite voreingestellte Zeit t2 mindestens 3 Sekunden und höchstens 150 Sekunden beträgt, die dritte voreingestellte Zeit t3 mindestens 3 Sekunden und höchstens 150 Sekunden beträgt und N2 mindestens 2 und höchstens 100 beträgt.

7. Verfahren nach Anspruch 6, **dadurch gekennzeichnet, dass** N2 mindestens 4 und höchstens 80 beträgt.

8. Verfahren nach Anspruch 5, **dadurch gekennzeichnet, dass** der gesamte Reisdämpfschritt in die Vorstufe des Reisdämpfens und die Endstufe des Reisdämpfens gemäß der zeitlichen Abfolge unterteilt ist, wobei
während der Vorstufe des Reisdämpfens das Heizelement (80) den Innentopf (10) in dem Elektrokocher für eine zweite voreingestellte Zeit t2, die als t21 bekannt ist, aufheizt;
während der Endstufe des Reisdämpfens das Heizelement (80) den Innentopf (10) in dem Elektrokocher für eine zweite voreingestellte Zeit t2, bekannt als t22, aufheizt, wobei t21 länger als t22 ist.

9. Verfahren nach Anspruch 8, **dadurch gekennzeichnet, dass** t21 mindestens 3 Sekunden und höchstens 150 Sekunden beträgt und t22 mindestens 3 Sekunden und höchstens 150 Sekunden beträgt.

10. Verfahren nach Anspruch 5, **dadurch gekennzeichnet, dass** der gesamte Reisdämpfschritt in die Vorstufe des Reisdämpfens und die Endstufe des Reisdämpfens gemäß der zeitlichen Abfolge unterteilt ist, wobei
in der genannten Vorstufe des Reisdämpfens das Heizelement (80) den Betrieb stoppt und das Reisdämpfen bis zu einer dritten voreingestellten Zeit t3, bekannt als t31, fortgesetzt wird;
in der Endstufe des Reisdämpfens das Heizelement (80) den Betrieb stoppt und das Reisdämpfen bis zu einer dritten voreingestellten Zeit t3, bekannt als t32, fortgesetzt wird, wobei t31 mindestens 3 Sekunden und höchstens 150 Sekunden beträgt und t32 mindestens 3 Sekunden und höchstens 150 Sekunden beträgt.

11. Verfahren nach Anspruch 1, **dadurch gekennzeichnet, dass** der Elektrokocher weiter einen Drucksteuerschalter zum Ablassen des in dem Trennhohlraum (30) zwischen der Außenfläche des Dämpfers (20) und der Innenwand des Innentopfes (10) aufgebauten Drucks umfasst; wenn der Drucksteuerschalter geöffnet wird, der Trennhohlraum (30) mit der Außenseite des Elektrokochers verbunden wird, um die Freisetzung von Wasser aus dem Lagerhohlraum (23) zu beschleunigen.

## Revendications

1. Procédé de commande de cuiseurs électriques, dans lequel lesdits cuiseurs électriques comprennent un récipient interne (10), un élément chauffant (80), une unité de détection de débordement (40), un cuiseur à vapeur (20) logé à l'intérieur dudit récipient interne (10), et ledit élément chauffant (80) chauffe ledit récipient interne (10), le fond dudit cuiseur à vapeur (20) présentant une structure ouverte (21) qui s'étend vers la paroi inférieure et/ou la paroi latérale dudit récipient interne (10), ledit cuiseur à vapeur (20) comprenant une zone perméable à l'eau (22) et une cavité portante (23) positionnée au-dessus de ladite zone perméable à l'eau (22), un espace supérieur ouvert (211) formé par ladite structure ouverte (21) étant interconnecté avec ladite cavité portante (23) au travers de ladite zone perméable à l'eau (22), l'extrémité de détection de l'unité de détection de débordement (40) étant interconnectée avec ladite cavité portante (23), et la partie supérieure dudit cuiseur à vapeur (20) étant interconnectée avec la bouche dudit récipient interne (10) ; ledit procédé de commande de cuiseurs électriques comprenant les étapes suivantes :
ledit élément chauffant (80) du cuiseur électrique chauffe le récipient interne (10) dans ledit cuiseur électrique, et ledit cuiseur électrique entre dans l'étape de lavage et de cuisson du riz ;
lors d'un cycle unique de lavage et de cuisson du riz, ledit élément chauffant (80) chauffe le récipient interne (10) à l'intérieur dudit cuiseur électrique jusqu'à ce que ladite unité de détection de débordement (40) entre en contact avec de l'eau, et à cet instant, ledit élément chauffant (80) s'arrête de fonctionner et le cuiseur continue le cycle unique de lavage et de cuisson du riz jusqu'au premier temps préétabli t1, et ce cycle est répété N1 fois ;
ledit cuiseur électrique entre dans l'étape de cuisson à la vapeur du riz, et ledit élément chauffant (80) chauffe le récipient interne (10) dans ledit cuiseur électrique.

2. Procédé selon la revendication 1, **caractérisé en ce que** dans un cycle unique de lavage et de cuisson du riz, ledit premier temps préétabli t1 est au moins 3 secondes et au plus 150 secondes, et ledit N1 est au moins 2 et au plus 100.

3. Procédé selon la revendication 2, **caractérisé en ce que** dans un cycle unique de lavage et de cuisson du riz, ledit premier temps préétabli t1 est au moins 5 secondes et au plus 100 secondes, et ledit N1 est au moins 4 et au plus 80.

4. Procédé selon la revendication 1, **caractérisé en ce que** durant la période complète de ladite étape de cuisson à la vapeur du riz, ledit élément chauffant (80) chauffe le récipient interne (10) en continu jusqu'à ce que le riz soit cuit par la vapeur.

5. Procédé selon la revendication 1, **caractérisé en ce que** durant un cycle unique de cuisson à la vapeur du riz, après que ledit élément chauffant (80) a chauffé ledit récipient interne (10) pendant un deuxième temps préétabli t2, ledit élément chauffant (80) s'arrête de fonctionner et le cuiseur continue de cuire le riz à la vapeur jusqu'au troisième temps préétabli t3, et ce cycle de cuisson à la vapeur du riz est répété N2 fois.

6. Procédé selon la revendication 5, **caractérisé en ce que** dans un cycle unique de cuisson à la vapeur du riz, ledit deuxième temps préétabli t2 est au moins 3 secondes et au plus 150 secondes, ledit troisième temps préétabli t3 est au moins 3 secondes et au plus 150 secondes, et ledit N2 est au moins 2 et au plus 100.

7. Procédé selon la revendication 6, **caractérisé en ce que** ledit N2 est au moins 4 et au plus 80.

8. Procédé selon la revendication 5, **caractérisé en ce que** l'étape complète de cuisson à la vapeur du riz est divisée en la phase préliminaire de cuisson à la vapeur du riz et la phase finale de cuisson à la vapeur du riz selon une séquence dans le temps, selon lequel
durant ladite phase préliminaire de cuisson à la vapeur du riz, ledit élément chauffant (80) chauffe le récipient interne (10) dans ledit cuiseur électrique pendant un deuxième temps préétabli t2 appelé t21 ;
durant ladite phase finale de cuisson à la vapeur du riz, ledit élément chauffant (80) chauffe le récipient interne (10) dans ledit cuiseur électrique pendant un deuxième temps préétabli t2 appelé t22, dans lequel t21 est plus long que t22.

9. Procédé selon la revendication 8, **caractérisé en ce que** ledit t21 est au moins 3 secondes et au plus 150 secondes, et ledit t22 est au moins 3 secondes et au plus 150 secondes.

10. Procédé selon la revendication 5, **caractérisé en ce que** l'étape complète de cuisson à la vapeur du riz est divisée en la phase préliminaire de cuisson à la vapeur du riz et la phase finale de cuisson à la vapeur du riz selon une séquence dans le temps, selon lequel
dans ladite phase préliminaire de cuisson à la vapeur du riz, ledit élément chauffant (80) s'arrête de fonctionner et la cuisson à la vapeur du riz continue jusqu'à un troisième temps préétabli t3 appelé t31 ;
dans ladite phase finale de cuisson à la vapeur du riz, ledit élément chauffant (80) s'arrête de fonctionner et la cuisson à la vapeur du riz continue jusqu'à un troisième temps préétabli t3 appelé t32, dans lequel ledit t31 est au moins 3 secondes et au plus 150 secondes, et ledit t32 est au moins 3 secondes et au plus 150 secondes.

11. Procédé selon la revendication 1, **caractérisé en ce que** ledit cuiseur électrique comprend en outre un commutateur de commande de pression pour relâcher la pression accumulée à l'intérieur de la cavité de séparation (30) entre la surface externe dudit cuiseur à vapeur (20) et la paroi intérieure dudit récipient interne (10) ; lorsque ledit commutateur de commande de pression est ouvert, ladite cavité de séparation (30) est reliée à l'extérieur dudit cuiseur électrique pour accélérer la libération d'eau de ladite cavité portante (23).
